# EUROPÄISCHE PATENTSCHRIFT

(11) **EP 3 696 623 B1**
(45) Veröffentlichungstag und Bekanntmachung des Hinweises auf die Patenterteilung: **13.03.2024**
(21) Anmeldenummer: 20153175.3
(22) Anmeldetag: 22.01.2020
(51) Int. Cl.: G05B 15/02, A47J 43/07, H05B 1/02, A47J 36/32

(54) **STEUERGERÄT UND VERFAHREN ZUM BETRIEB EINES HAUSGERÄTS FÜR DIE HERSTELLUNG EINES NAHRUNGSMITTELS**
CONTROL DEVICE AND METHOD FOR OPERATING A DOMESTIC APPLIANCE FOR PREPARING A FOOD PRODUCT
APPAREIL DE COMMANDE ET PROCÉDÉ DE FONCTIONNEMENT D'UN APPAREIL ÉLECTROMÉNAGER POUR LA FABRICATION D'UN ALIMENT

(30) Priorität: 12.02.2019 DE 102019201777
(43) Veröffentlichungstag der Anmeldung: 19.08.2020
(73) Patentinhaber: BSH Hausgeräte GmbH, 81739 München (DE)
(72) Erfinder: Grimminger, Jochen, 89407 Dillingen (DE); Kolbe, Andreas, 12683 Berlin (DE); Krautenbacher, Otto, 83349 Palling (DE); Söllner, Christoph, 81475 München (DE); Sieveke, Kai, 97070 Würzburg (DE); Brunner, Andreas, 83301 Traunreut (DE)

(56) Entgegenhaltungen:
- EP-A1- 0 933 596
- EP-A1- 2 901 903
- DE-T2- 60 016 435
- US-B1- 6 587 739

## Beschreibung

Die Erfindung betrifft eine Steuereinheit für ein Hausgerät und ein entsprechendes Verfahren zur Herstellung eines Nahrungsmittels unter Verwendung von Rezeptdaten.

Zur Herstellung von Nahrungsmitteln (z.B. eines Abendessens oder eines Kuchens oder eines Speiseeises) wird häufig auf Rezepte zurückgegriffen, die die erforderlichen Zutaten und Arbeitsschritte für ein Nahrungsmittel beschreiben. Dabei können bei der Herstellung eines Nahrungsmittels ein oder mehrere Haus- bzw. Küchengeräte verwendet werden, wie z.B. ein Herd, ein Ofen, ein Kühlgerät, ein Multifunktionskocher, etc.

Beim Kochen oder Backen können von einer Person Fehler begangen werden, die die Qualität des herzustellenden Nahrungsmittels beeinträchtigen. Beispielsweise können fehlerhafte Mengen von Zutaten verwendet werden und/oder es können fehlerhafte Einstellungen von Hausgeräten verwendet werden.

Aus der US 6 587 739 B1 ist ein intelligentes Nahrungsmittelzubereitungssystem vorbekannt. Die EP 2 901 903 A1 beschäftigt sich mit dem Thermomix von Vorwerk. Die DE 600 16 435 T2 beschreibt ein System für die Nahrungsmittelherstellung, das mehrere Haushaltsgeräte orchestriert. Die EP 0 933 596 A1 offenbart ein intelligentes Gargerät.

Das vorliegende Dokument befasst sich mit der technischen Aufgabe, eine Steuereinheit für ein Hausgerät und ein Verfahren bereitzustellen, durch die Fehler bei der Herstellung eines Nahrungsmittels vermieden und die Güte eines hergestellten Nahrungsmittels erhöht werden können.

Die Aufgabe wird jeweils durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird eine Steuereinheit für ein Hausgerät beschrieben. Das Hausgerät bzw. das Küchengerät kann z.B. einen Multifunktionskocher oder einen Ofen umfassen bzw. ein solches Gerät sein. Das Hausgerät kann einen Verarbeitungsraum, z.B. einen Behälter und/oder einen Gar- bzw. einen Kühlraum, zur Verarbeitung eines Nahrungsmittels umfassen. Des Weiteren kann das Hausgerät eine Benutzerschnittstelle zur Interaktion mit einem Nutzer des Hausgeräts umfassen.

Das Hausgerät ist eingerichtet, einen Nutzer bei der Herstellung eines Nahrungsmittels zu unterstützen, z.B. durch die erforderlichen Arbeitsschritte eines Rezeptes führen.

Die Steuereinheit ist eingerichtet, Rezeptdaten für ein herzustellendes Nahrungsmittel zu ermitteln. Die Rezeptdaten können z.B. auf einer Speichereinheit des Hausgeräts gespeichert sein. Alternativ oder ergänzend können die Rezeptdaten ggf. von einer (externen) Datenbank auf die Speichereinheit des Hausgeräts geladen werden.

Die Rezeptdaten umfassen zumindest einen Arbeitsschritt, der von dem Hausgerät auszuführen ist. Insbesondere können die Rezeptdaten eine Sequenz von Arbeitsschritten umfassen, von denen ein oder mehrere von dem Nutzer und von denen ein oder mehrere von dem Hausgerät auszuführen sind. Dabei können die Rezeptdaten für zumindest einen Arbeitsschritt zumindest eine Vorbedingung in Bezug auf einen Zustand des Hausgeräts umfassen, wobei die Vorbedingung zur Ausführung des Arbeitsschrittes erfüllt sein sollte oder erfüllt sein muss. Mit anderen Worten, die Ausführung zumindest eines Arbeitsschrittes auf dem Hausgerät kann an ein oder mehrere Vorbedingungen gebunden sein. Dabei kann sich eine Vorbedingung auf einen Zustand des Hausgeräts beziehen, der für die Ausführung des Arbeitsschrittes vorliegen sollte oder vorliegen muss.

Die Vorbedingung umfasst eine Bedingung in Bezug auf die Temperatur des Verarbeitungsraums für Nahrungsmittel, insbesondere des Behälters und/oder des Gar- bzw. Kühlraums, des Hausgeräts. Beispielsweise kann die Vorbedingung verlangen, dass die Temperatur größer bzw. kleiner als ein bestimmter minimaler bzw. maximaler Temperaturwert ist. Ergänzend umfasst die Vorbedingung eine Bedingung in Bezug auf ein Werkzeug (z.B. ein Messer, ein Knethacken, eine Reibe, einen Besen, etc.) des Hausgeräts, mit dem das herzustellende Nahrungsmittel im Rahmen des Arbeitsschrittes bearbeitet werden soll.

Außerdem ist die Steuereinheit eingerichtet, zu bestimmen, ob die Vorbedingung zur Ausführung eines Arbeitsschrittes erfüllt ist oder nicht. Zu diesem Zweck können

Sensordaten von ein oder mehreren Sensoren (z.B. von einem Temperatursensor und/oder von einem Gewichtssensor) des Hausgeräts erfasst werden. Es kann dann auf Basis der Sensordaten bestimmt werden, ob die Vorbedingung erfüllt ist oder nicht. Insbesondere kann die Steuereinheit eingerichtet sein, Temperaturdaten in Bezug auf die Temperatur des Verarbeitungsraums, insbesondere des Behälters oder des Gar- bzw. Kühlraums, des Hausgeräts zu ermitteln. Es kann dann in zuverlässiger Weise auf Basis der Temperaturdaten bestimmt werden, ob die Vorbedingung zur Ausführung des Arbeitsschrittes erfüllt ist oder nicht.

Des Weiteren ist die Steuereinheit eingerichtet, wenn bestimmt wurde, dass die Vorbedingung nicht erfüllt ist, zumindest eine Maßnahme durchzuführen, um zu bewirken, dass eine Auswirkung der nicht erfüllten Vorbedingung auf das herzustellende Nahrungsmittel reduziert wird (im Vergleich zu einer Situation, bei der die Rezeptdaten (unter der Annahme, dass die Vorbedingung erfüllt war) ohne Änderung abgearbeitet würden). Es kann somit ggf. eine Anpassung der Rezeptdaten bei nicht erfüllter Vorbedingung erfolgen.

Die von der Steuereinheit ausgeführte Maßnahme kann das Ausgeben eines Hinweises an einen Nutzer des Hausgeräts über die Benutzerschnittstelle des Hausgeräts umfassen. Dabei kann der ausgegebene Hinweis darauf gerichtet sein, den Nutzer zu veranlassen, den Zustand des Hausgeräts derart zu ändern, dass die Vorbedingung erfüllt ist. Beispielsweise kann der Nutzer aufgefordert werden, die Temperatur des Verarbeitungsraums des Hausgeräts zu verändern. Alternativ oder ergänzend kann der Nutzer aufgefordert werden, das erforderliche Werkzeug an das Hausgerät zu montieren. So kann in zuverlässiger Weise die Qualität des herzustellenden Nahrungsmittels erhöht werden. Insbesondere können so Fehler bei der Herstellung eines Nahrungsmittels vermieden werden.

Die Maßnahme kann das Betreiben einer Komponente, insbesondere einer Temperierungseinheit, des Hausgeräts umfassen, um den Zustand des Hausgeräts derart zu ändern, dass die Vorbedingung für den Arbeitsschritt erfüllt ist. Insbesondere kann durch die Temperierungseinheit bewirkt werden, dass der Verarbeitungsraum des Hausgeräts eine bestimmte Temperatur aufweist, um den Arbeitsschritt ausführen zu können. Beispielsweise kann zur Herstellung eines Speiseeises sichergestellt werden, dass die Temperatur des Verarbeitungsraums kleiner als eine bestimmte Maximaltemperatur ist. So kann in zuverlässiger Weise die Qualität des herzustellenden Nahrungsmittels erhöht werden. Insbesondere können so Fehler bei der Herstellung eines Nahrungsmittels vermieden werden.

Alternativ oder ergänzend kann die Maßnahme das Verzögern der automatischen Ausführung des Arbeitsschrittes umfassen, bis zu einem Zeitpunkt, an dem sich der Zustand des Hausgeräts derart verändert hat, dass die Vorbedingung erfüllt ist. Beispielsweise kann die automatische Ausführung des Arbeitsschrittes verzögert werden, bis die Temperatur des Verarbeitungsraumes eine bestimmte Temperatur aufweist. Der Nutzer kann über die Benutzerschnittstelle darüber informiert werden, dass sich die automatische Ausführung des Arbeitsschrittes verzögert. So kann in zuverlässiger Weise die Qualität des herzustellenden Nahrungsmittels erhöht werden. Insbesondere können so Fehler bei der Herstellung eines Nahrungsmittels vermieden werden.

Die Steuereinheit ist eingerichtet, Zustandsdaten in Bezug auf den tatsächlichen Zustand (z.B. die tatsächliche Temperatur des Verarbeitungsraumes oder das tatsächlich montierte Werkzeug) des Hausgeräts zu ermitteln. Die Maßnahme umfasst dann das Anpassen der Rezeptdaten in Abhängigkeit von den Zustandsdaten, um die Auswirkung der Abweichung des tatsächlichen Zustands des Hausgeräts von dem durch die Vorbedingung geforderten Zustand des Hausgeräts (z.B. von einer Soll-Temperatur oder von einem Soll-Werkzeug) auf das herzustellende Nahrungsmittel zu reduzieren. Insbesondere können ein oder mehrere folgende Arbeitsschritte der Rezeptdaten abgeändert werden, um trotz nicht erfüllter Vorbedingung für den aktuellen Arbeitsschritt dennoch ein qualitativ hochwertiges Nahrungsmittel herzustellen.

Die Steuereinheit ist eingerichtet, Rezeptdaten für das herzustellende Nahrungsmittel zu ermitteln. Dabei umfassen die Rezeptdaten zumindest einen aktuellen Arbeitsschritt, der auf die Zugabe einer bestimmten Zutat in den Behälter gerichtet ist. Die Zutat wird dabei typischerweise durch einen Nutzer in den Behälter gegeben. Insbesondere kann der Nutzer über die Benutzerschnittstelle des Hausgeräts aufgefordert werden, die bestimmte Zutat in den Behälter zu geben. Die Rezeptdaten umfassen typischerweise mehrere Arbeitsschritte, die sich auf die Zugabe jeweils einer Zutat richten.

Die Rezeptdaten können eine Rechenvorschrift zur Ermittlung der Menge der bestimmten Zutat für einen Arbeitsschritt umfassen, wobei die Rechenvorschrift von zumindest einer Variablen in Bezug auf einen Inhalt des Behälters abhängt. Insbesondere kann die Rechenvorschrift anzeigen, wie die zuzugebende Menge der bestimmten Zutat für den aktuellen Arbeitsschritt aus den bereits (in vorhergehenden Arbeitsschritten) in den Behälter gegebenen Mengen von ein oder mehreren Zutaten berechnet werden kann.

Die Rezeptdaten können ggf. zumindest einen vorhergehenden Arbeitsschritt umfassen, in dem eine vorhergehende Zutat (durch den Nutzer) in den Behälter gegeben werden sollte. Insbesondere sollte ggf. eine definierte Soll-Menge der vorhergehenden Zutat in den Behälter gegeben werden. Dabei ist der vorhergehende Arbeitsschritt dem aktuellen Arbeitsschritt zeitlich vorgelagert. Eine Variable der Rechenvorschrift zu Ermittlung der Menge der bestimmten Zutat (die in dem aktuellen Arbeitsschritt zugegeben werden soll) kann die tatsächlich zugegebene Menge der vorhergehenden Zutat anzeigen.

Die Rezeptdaten können insbesondere eine Mehrzahl von vorhergehenden Arbeitsschritten umfassen, in denen jeweils eine vorhergehende Zutat in den Behälter gegeben werden sollte. Des Weiteren kann die Rechenvorschrift zur Ermittlung der erforderlichen Menge der bestimmten Zutat für den aktuellen Arbeitsschritt eine Mehrzahl von Variablen für die Mengen der entsprechenden Mehrzahl von vorhergehenden Zutaten umfassen.

Gemäß einem weiteren Aspekt der Erfindung wird ein Hausgerät beschrieben. Das Hausgerät umfasst einen Verarbeitungsraum, insbesondere einen Behälter und/oder einen Gar- bzw. Kühlraum, zur Verarbeitung eines Nahrungsmittels. Des Weiteren umfasst das Hausgerät zumindest eine Steuereinheit, die ein oder mehrere der in diesem Dokument beschriebenen Merkmale aufweist.

Gemäß einem weiteren Aspekt der Erfindung wird ein Verfahren zum Betrieb eines Hausgeräts beschrieben, wobei das Hausgerät eingerichtet ist, einen Nutzer bei der Herstellung eines Nahrungsmittels zu unterstützen. Das Verfahren umfasst das Ermitteln von Rezeptdaten für das herzustellende Nahrungsmittel, wobei die Rezeptdaten zumindest einen Arbeitsschritt umfassen, der von dem Hausgerät auszuführen ist, und wobei die Rezeptdaten zumindest eine Vorbedingung in Bezug auf einen Zustand des Hausgeräts umfassen, die zur Ausführung des Arbeitsschrittes erfüllt sein sollte oder muss. Außerdem umfasst das Verfahren das Bestimmen, ob die Vorbedingung erfüllt ist oder nicht. Des Weiteren umfasst das Verfahren, wenn bestimmt wurde, dass die Vorbedingung nicht erfüllt ist, das Durchführen einer Maßnahme, um zu bewirken, dass die Vorbedingung erfüllt wird, oder um zu bewirken, dass eine Auswirkung der nicht erfüllten Vorbedingung auf das herzustellende Nahrungsmittel reduziert wird.

Im Weiteren wird die Erfindung anhand von in der beigefügten Zeichnung dargestellten Ausführungsbeispielen näher beschrieben. Dabei zeigen
- Figur 1: ein Blockdiagramm eines beispielhaften Hausgeräts;
- Figur 2: beispielhafte Rezeptdaten; und
- Figur 3: ein Ablaufdiagramm eines beispielhaften Verfahrens zur Herstellung eines Nahrungsmittels.

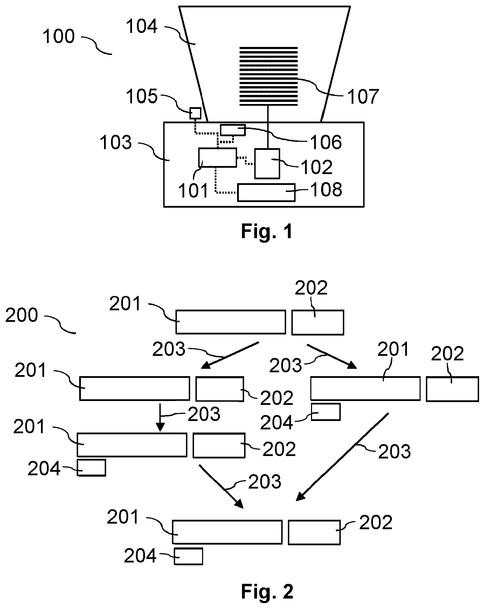

Wie eingangs dargelegt, befasst sich das vorliegende Dokument mit der Unterstützung einer Person in einem Haushalt bei der Herstellung eines Nahrungsmittels. Bei der Herstellung eines Nahrungsmittels können ein oder mehrere Hausgeräte bzw. Küchengeräte verwendet werden. Fig. 1 zeigt ein beispielhaftes Hausgerät 100. Das in Fig. 1 dargestellte Hausgerät 100 umfasst einen Behälter 104, in dem Zutaten für ein herzustellendes Nahrungsmittel verarbeitet werden können, z.B. mittels eines Werkzeugs 107, das durch einen Motor 102 angetrieben wird. Dabei können ggf. unterschiedliche Werkzeuge 107 (z.B. ein Messer, ein Knethaken oder ein Besen) an dem Motor 102 montiert werden. Das Hausgerät 100 kann eingerichtet sein, den Behälter 104 mittels einer Temperierungseinheit 105 zu temperieren, z.B. zu kühlen oder zu erwärmen.

Des Weiteren kann das Hausgerät 100 ein oder mehrere Sensoren 106 umfassen, die eingerichtet sind, Sensordaten in Bezug auf das Hausgerät 100 (insbesondere in Bezug auf einen Zustand des Hausgeräts 100) und/oder in Bezug auf das herzustellende Nahrungsmittel zu erfassen. Ein beispielhafter Sensor 106 ist ein Temperatursensor, der eingerichtet ist, Temperaturdaten in Bezug auf die Temperatur des Behälters 104 und/oder des darin enthaltenen Nahrungsmittels zu erfassen. Ein weiterer beispielhafter Sensor 106 ist ein Gewichtssensor bzw. eine Waage, der bzw. die eingerichtet ist, Gewichtsdaten in Bezug auf das Gewicht des Behälters 104 und/oder des darin enthaltenen Nahrungsmittels zu erfassen.

Außerdem kann das Hausgerät 100 eine Benutzerschnittstelle 108 umfassen, die es einem Nutzer ermöglicht, Steuereingaben an das Hausgerät 100 zu tätigen (z.B. über ein oder mehrere Knöpfe), und/oder die es dem Hausgerät 100 ermöglicht, Rückmeldungen an einen Nutzer des Hausgeräts 100 auszugeben (z.B. über einen Bildschirm). Insbesondere kann die Benutzerschnittstelle 108 dazu genutzt werden, Information in Bezug auf Arbeitsschritte eines Rezeptes zur Herstellung eines bestimmten Nahrungsmittels an einen Nutzer auszugeben.

Des Weiteren umfasst das Hausgerät 100 eine Steuereinheit 101, die eingerichtet ist, Rezeptdaten für ein Rezept zur Herstellung eines bestimmten Nahrungsmittels zu ermitteln (z.B. aus einer Speichereinheit des Hausgeräts 100 auszulesen oder von einer Datenbank herunterzuladen). Ferner kann die Steuereinheit 101 eingerichtet sein, das Hausgerät 100 zumindest teilweise automatisch in Abhängigkeit von den Rezeptdaten zu betreiben, um den Nutzer bei der Herstellung des bestimmten Nahrungsmittels zu unterstützen.

Die Rezeptdaten können die für die Herstellung eines Nahrungsmittels erforderlichen Arbeitsschritte anzeigen. Fig. 2 zeigt beispielhafte Rezeptdaten 200 in schematischer Weise. Die Rezeptdaten 200 umfassen einzelne Arbeitsschritte bzw. Arbeitsanweisungen 201. Des Weiteren zeigen die Rezeptdaten 200 die jeweils ausführende Einheit 202 für einen Arbeitsschritt 201 an (z.B. den Nutzer oder ein Hausgerät 100). Außerdem können die Rezeptdaten 200 eine zeitliche Abfolge der erforderlichen Arbeitsschritte 201 anzeigen. Zu diesem Zweck können die Arbeitsschritte 201 z.B. in einem Ablaufdiagramm (wie in Fig. 2 dargestellt) angeordnet sein. Wie in Fig. 2 dargestellt, kann es dabei ggf. möglich sein, mehrere Arbeitsschritte 201 parallel und/oder unabhängig voneinander auszuführen. Andererseits kann die Ausführung eines Arbeitsschrittes 201 ggf. an ein oder mehrere (Vor-) Bedingungen 203 geknüpft sein. Beispielsweise kann die Ausführung eines Arbeitsschrittes 201 nur unter der Bedingung erfolgen, dass ein oder mehrere vorhergehende Arbeitsschritte 203 bereits ausgeführt wurden.

Die Rezeptdaten 200 für ein herzustellendes Nahrungsmittel sind typischerweise auf eine bestimmte Menge des herzustellenden Nahrungsmittels abgestimmt. Ein Arbeitsschritt 201 in den Rezeptdaten 200 kann die Zugabe einer bestimmten Menge einer Zutat vorsehen. Insbesondere können die Rezeptdaten 200 mehrere Arbeitsschritte 201 aufweisen, die jeweils auf die Zugabe einer bestimmten Menge einer jeweiligen Zutat gerichtet sind. Die ausführende Einheit 202 für die Zugabe einer Zutat ist typischerweise eine menschliche Person, insbesondere ein Nutzer des Hausgeräts 100, das den Nutzer durch eine Sequenz von Arbeitsschritten 201 eines Rezeptes führt.

Der Nutzer kann somit beim Abarbeiten eines Rezeptes wiederholt aufgefordert werden, bestimmte Mengen von jeweiligen Zutaten in den Behälter 104 des Hausgeräts 100 zu geben. Wenn sich der Nutzer präzise an die vorgegeben Mengen von Zutaten hält, so kann typischerweise ein optimales Koch- oder Backergebnis erzielt werden. Andererseits können Abweichungen bei den zugegebenen Mengen von Zutaten zu einem Koch- oder Backergebnis mit reduzierter Qualität führen.

Die Rezeptdaten 200 können alternativ oder ergänzend zu einer Mengenangabe für eine Zutat eine Rechenvorschrift 204 umfassen, die es ermöglicht, die Menge einer Zutat, die in einem aktuellen Arbeitsschritt 201 in den Behälter 104 gegeben werden soll, auf Basis von ein oder mehreren Variablen zu berechnen. Die ein oder mehreren Variablen können sich dabei auf ein oder mehrere Zutaten beziehen, die in ein oder mehreren vorhergehenden Arbeitsschritten 201 in den Behälter 104 gegeben werden sollten. Beispielhafte Variablen sind
- das kumulierte Gewicht und/oder die kumulierte Menge der Zutaten, die bereits in den Behälter 104 gegeben wurden. Der Wert dieser Variable kann z.B. anhand eines Gewichtssensors 106 des Hausgeräts 100 ermittelt werden (an dem Zeitpunkt, an dem der aktuelle Arbeitsschritt 201 ausgeführt werden soll); und/oder
- das Gewicht und/oder die Menge einer einzelnen Zutat, die in einem einzelnen vorhergehenden Arbeitsschritt 201 in den Behälter 104 gegeben wurde. Der Wert dieser Variable kann z.B. anhand des Gewichtssensors 106 des Hausgeräts 100 ermittelt werden (an dem Zeitpunkt an dem der vorhergehende Arbeitsschritt 201 ausgeführt wurde).

Die Werte der ein oder mehreren Variablen können bei der Ausführung der Rezeptdaten 200 in einer Speichereinheit des Hausgeräts 100 gespeichert und bei Bedarf genutzt werden. Im Vorfeld zur Ausführung eines aktuellen Arbeitsschrittes 201 kann dann die Menge einer zuzugebenden Zutat auf Basis der Rechenvorschrift 204 des aktuellen Arbeitsschrittes 201 und auf Basis der (gespeicherten) Werte der ein oder mehreren Variablen ermittelt werden. So kann gewährleistet werden, dass auch wenn der Nutzer von den Mengenvorgaben abweichende Mengen an Zutaten in den Behälter 104 des Hausgeräts 100 füllt, optimale Koch- oder Backergebnisse erzielt werden können. Des Weiteren wird es einem Nutzer ermöglicht, in flexibler Weise die Menge eines herzustellenden Nahrungsmittels zu verändern.

Wie bereits oben dargelegt, kann die Ausführung eines Arbeitsschrittes 201 daran geknüpft sein, dass ein oder mehrere Bedingungen bzw. Vorbedingungen 203 erfüllt sind. Dabei kann sich eine Bedingung 203 auf einen Zustand des Hausgeräts 100 beziehen. Beispielsweise kann die automatische Ausführung eines Arbeitsschrittes 201 durch das Hausgerät 100 an eine bestimmte Vorbedingung 203 in Bezug auf den Zustand des Hausgeräts 100 geknüpft sein. Beispielhafte Vorbedingungen 203 in Bezug auf den Zustand des Hausgeräts 100 sind
- eine Bedingung 203 in Bezug auf ein bestimmtes Werkzeug 107, das mit dem Aktuator 102 des Hausgeräts 100 verbunden sein muss, damit ein Arbeitsschritt 201 ausgeführt werden kann; und/oder
- eine bestimmte Temperatur, die der Behälter 104 mindestens aufweisen muss oder höchstens aufweisen darf, bevor ein Arbeitsschritt 201 ausgeführt werden kann.

Die Steuereinheit 101 des Hausgeräts 100 kann eingerichtet sein, bei einem Arbeitsschritt 201, der durch das Hausgerät 100 auszuführen ist, zu überprüfen, ob die ein oder mehreren Bedingungen 203 zur Ausführung des Arbeitsschrittes 201, insbesondere die ein oder mehreren Bedingungen 203 in Bezug auf den Zustand des Hausgeräts 100, erfüllt sind. Wenn ermittelt wird, dass alle erforderlichen Bedingungen 203 erfüllt sind, dann kann der Arbeitsschritt 201 automatisch ausgeführt werden. Wenn andererseits ermittelt wird, dass zumindest eine Bedingung 203 nicht erfüllt ist, dann kann von der Steuereinheit 101 eine Maßnahme durchgeführt werden, um zu bewirken, dass die nicht erfüllte Bedingung 203 zumindest teilweise erfüllt wird und/oder zumindest teilweise durch Änderung von ein oder mehreren nachfolgenden Arbeitsschritten 201 kompensiert wird.

Beispielhafte Maßnahmen sind
- eine Ausgabe an den Nutzer des Hausgeräts 100, um den Nutzer über die nichterfüllte Bedingung 203 zu informieren und/oder um den Nutzer zu veranlassen, dafür zu sorgen, dass die Bedingung 203 erfüllt wird; und/oder
- das Betreiben des Hausgeräts 100, um den Zustand des Hausgeräts 100 derart zu verändern, dass die Bedingung 203 erfüllt wird (z.B. durch Betrieb der Temperierungseinheit 105); und/oder
- das Anpassen der Rezeptdaten 200, um das Nahrungsmittel auch mit dem vorliegenden Zustand des Hausgeräts 100 herstellen zu können.

Es kann somit die Funktionalität einer "Vorbedingung" in einem Rezept abgebildet werden. Insbesondere kann in einem Rezept hinterlegt werden, dass ein Rezept oder ein Arbeitsschritt 201 des Rezeptes nur dann gestartet werden kann, wenn sich das Hausgerät 100 in einem bestimmten Ausgangszustand für das Rezept bzw. für den Arbeitsschritt 201 befindet. Befindet sich das Hausgerät 100 nicht in diesem Ausgangszustand, so kann das Hausgerät 100 wie folgt reagieren:
- Das Hausgerät 100 kann das Rezept stoppen und dem Nutzer mitteilen, warum das Rezept nicht ausgeführt werden kann.
- Das Hausgerät 100 kann versuchen, den gewünschten Ausgangszustand herbeizuführen. Wenn z.B. das Hausgerät 100 zu heiß ist, um das Rezept zu starten, so kann das Hausgerät vor dem Rezeptstart eine Wartezeit einfügen, um auf eine erlaubte Temperatur abzukühlen.
- Das Hausgerät 100 kann ggf. das Rezept soweit anpassen, dass eine Zubereitung mit dem aktuellen Ausgangszustand des Hausgeräts 100 gelingt.

Ein Rezept besteht typischerweise aus mehreren Zubereitungsschritten 201, und das oben beschriebene Konzept von Vorbedingungen 203 und entsprechende Reaktionen des Hausgerätes 100 kann ggf. auf jeden einzelnen Zubereitungsschritt 201 angewandt werden.

Beispielsweise kann ein Nutzer versuchen, bei einem Kochprozessor bzw. einem Multifunktionskocher ein Rezept zur Zubereitung von Speiseeis zu starten, wobei jedoch die Ausgangstemperatur des Behälters 104 100°C beträgt, da der Nutzer zuvor im Behälter 104 Wasser gekocht hat. Die Rezeptdaten 200 zur Herstellung des Speiseeises können eine Vorbedingung 203 aufweisen, die verlangt, dass ein Start nur bei einer Topftemperatur < 50°C erlaubt ist. Das Gerät 100 kann dann dem Nutzer mitteilen, dass der Behälter 104 zu heiß ist und ein Start des Rezepts kann unterbunden und/oder verzögert werden.

In einem weiteren Beispiel füllt ein Nutzer in einem Arbeitsschritt 201 heißes Wasser in den Behälter 104 ein. Der folgende Zubereitungsschritt 201 kann jedoch ggf. auf kaltes Wasser ausgelegt sein. Beispielsweise kann als Vorbedingung für den folgenden Zubereitungsschritt 201 hinterlegt sein, dass die Ausgangstemperatur des Behälters 104 < 60°C sein muss, damit der Zubereitungsschritt 201 erfolgreich ausgeführt werden kann. Das Hausgerät 100 kann dann ggf. vor Ausführung des Zubereitungsschrittes 201 eine Wartezeit einbauen, um ein Abkühlen des Inhalts des Behälters 104 zu ermöglichen und um eine erfolgreiche Zubereitung zu gewährleisten.

In einem weiteren Beispiel startet ein Nutzer an einem Ofen ein Pizzaprogramm, wobei jedoch der Ofen vom letzten Betrieb noch zu heiß ist. In den Rezeptdaten 200 für das Pizza-Rezept kann als Bedingung 203 hinterlegt sein, welche Temperatur der Ofen beim Start des Programms aufweisen muss. Ggf. kann als Gegenmaßnahme die Zubereitungszeit verringert (d.h. ein Arbeitsschritt 201 angepasst werden) werden, um die Auswirkungen der relativ hohen Ausgangstemperatur zumindest teilweise zu kompensieren.

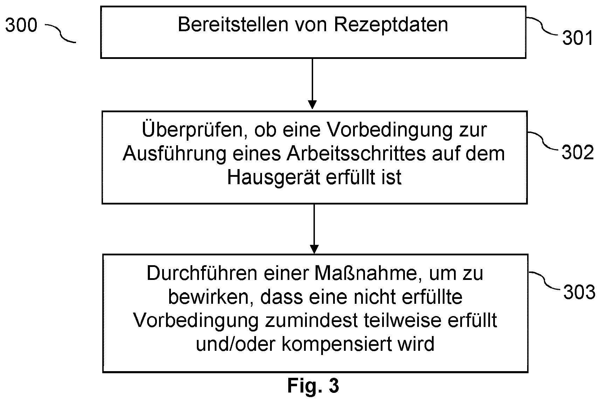

Fig. 3 zeigt ein Ablaufdiagramm eines beispielhaften Verfahrens 300 zum Betrieb eines Hausgeräts 100, das eingerichtet ist, einen Nutzer bei der Herstellung eines Nahrungsmittels zu unterstützen. Das Verfahren 300 kann z.B. durch eine Steuereinheit 101 des Hausgeräts 100 ausgeführt werden. Das Verfahren 300 umfasst das Ermitteln 301 von Rezeptdaten 200 für das herzustellende Nahrungsmittel, wobei die Rezeptdaten 200 zumindest einen Arbeitsschritt 201 umfassen, der von dem Hausgerät 100 auszuführen ist. Typischerweise umfassen die Rezeptdaten 200 eine Abfolge von Arbeitsschritten 201, die z.B. durch den Nutzer oder durch das Hausgerät 100 auszuführen sind. Die Steuereinheit 101 kann eingerichtet sein, die Abfolge von Arbeitsschritten 201 sequentiell abzuarbeiten. Dabei kann für einen Arbeitsschritt 201, der durch den Nutzer auszuführen ist, eine Ausgabe an den Nutzer über die Benutzerschnittstelle 108 des Hausgeräts 100 erfolgen. Andererseits kann ein Arbeitsschritt 201, der durch das Hausgerät 100 auszuführen ist, ggf. automatisch (insbesondere ohne Nutzereingabe) von dem Hausgerät 100 ausgeführt werden.

Die Rezeptdaten 200 können zumindest eine Vorbedingung 203 in Bezug auf einen Zustand des Hausgeräts 100 umfassen, die zur Ausführung eines von dem Hausgerät 100 auszuführenden Arbeitsschrittes 201 erfüllt sein sollte oder muss. Ein beispielhafter Zustand des Hausgeräts 100 ist eine bestimmte Temperatur eines Verarbeitungsraums (z.B. eines Behälters 104 und/oder eines Gar- bzw. Kühlraums) des Hausgeräts 100. Ein weiterer beispielhafter Zustand des Hausgeräts 100 ist, dass ein bestimmtes Werkzeug 107 in das Hausgerät 100 eingesetzt wurde (z.B. ein Messer, ein Knethaken oder ein Schneebesen).

Das Verfahren 300 umfasst ferner das Bestimmen 302, ob die Vorbedingung 203 erfüllt ist oder nicht. Zu diesem Zweck können Sensordaten von ein oder mehreren Sensoren 106 des Hausgeräts 100 ausgewertet werden.

Außerdem umfasst das Verfahren 300, wenn bestimmt wurde, dass die Vorbedingung 203 nicht erfüllt ist, das Durchführen 303 einer Maßnahme, um zu bewirken, dass die Vorbedingung 203 erfüllt wird, oder um zu bewirken, dass eine Auswirkung der nicht erfüllten Vorbedingung 203 auf das herzustellende Nahrungsmittel reduziert wird.

Andererseits kann das Verfahren 300 das (automatische) Ausführen des Arbeitsschrittes 201 umfassen, wenn bestimmte wurde, dass die Vorbedingung 203 (bzw. dass alle erforderlichen Vorbedingungen 203) zur Ausführung des Arbeitsschrittes 201 erfüllt sind.

Durch die in diesem Dokument beschriebenen Maßnahmen kann die Qualität von Nahrungsmitteln, die auf Basis von Rezeptdaten 200 und mittels eines Hausgeräts 100 hergestellt werden, erhöht werden.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Hausgeräts und/oder der vorgeschlagenen Steuereinheit und/oder des vorgeschlagenen Verfahrens veranschaulichen sollen.

## Patentansprüche

1. Steuereinheit (101) für ein Hausgerät (100), das eingerichtet ist, einen Nutzer bei der Herstellung eines Nahrungsmittels zu unterstützen; wobei die Steuereinheit (101) eingerichtet ist,
- Rezeptdaten (200) für das herzustellende Nahrungsmittel zu ermitteln; wobei die Rezeptdaten (200) zumindest einen Arbeitsschritt (201) umfassen, der von dem Hausgerät (100) auszuführen ist; wobei die Rezeptdaten (200) zumindest eine Vorbedingung (203) in Bezug auf einen Zustand des Hausgeräts (100) umfassen, die zur Ausführung des Arbeitsschrittes (201) erfüllt sein muss;
- Zustandsdaten in Bezug auf einen tatsächlichen Zustand des Hausgeräts (100) zu ermitteln;
- zu bestimmen, ob die Vorbedingung (203) erfüllt ist oder nicht; und
- wenn bestimmt wurde, dass die Vorbedingung (203) nicht erfüllt ist, eine Maßnahme durchzuführen, um zu bewirken, dass eine Auswirkung der nicht erfüllten Vorbedingung (203) auf das herzustellende Nahrungsmittel reduziert wird;
- wobei die Steuereinheit (101) eingerichtet ist, Temperaturdaten in Bezug auf die Temperatur eines Verarbeitungsraums des Hausgeräts (100) für Nahrungsmittel zu ermitteln und auf Basis der Temperaturdaten zu bestimmen, ob die Vorbedingung (103) erfüllt ist oder nicht, so dass die Vorbedingung (103) eine Bedingung in Bezug auf eine tatsächliche Temperatur des Verarbeitungsraums des Hausgeräts (100) für Nahrungsmittel umfasst; und
- die Maßnahme das Anpassen der Rezeptdaten (200) in Abhängigkeit von den Zustandsdaten umfasst, um eine Auswirkung der Abweichung des tatsächlichen Zustands des Hausgeräts (100) von einem durch die Vorbedingung (203) geforderten Zustand des Hausgeräts (100) auf das herzustellende Nahrungsmittel zu reduzieren;
**dadurch gekennzeichnet, dass**
- die Vorbedingung (103) zusätzlich eine Bedingung in Bezug auf ein Werkzeug (107) des Hausgeräts (100) umfasst, das durch einen Motor (102) angetrieben wird und mit dem das herzustellende Nahrungsmittel bearbeitet wird.

2. Steuereinheit (101) gemäß einem der vorhergehenden Ansprüche, wobei die Maßnahme das Betreiben einer Komponente, insbesondere einer Temperierungseinheit (105), des Hausgeräts (100) umfasst, um den Zustand des Hausgeräts (100) derart zu ändern, dass die Vorbedingung (203) erfüllt ist.

3. Steuereinheit (101) gemäß einem der vorhergehenden Ansprüche, wobei es sich bei dem Verarbeitungsraum um einen Behälter (104) und/oder einen Garraum des Hausgeräts handelt.

4. Steuereinheit (101) gemäß einem der vorhergehenden Ansprüche, wobei das Hausgerät (100) einen Multifunktionskocherumfasst

5. Hausgerät (100), das umfasst
- einen Verarbeitungsraum, insbesondere einen Behälter (104) und/oder einen Garraum, zur Verarbeitung eines Nahrungsmittels; und
- eine Steuereinheit (101) gemäß einem der vorhergehenden Ansprüche, zur Unterstützung eines Nutzers des Hausgeräts (100) bei der Herstellung eines Nahrungsmittels unter Verwendung des Hausgeräts (100).

6. Verfahren (300) zum Betrieb eines Hausgeräts (100), das eingerichtet ist, einen Nutzer bei der Herstellung eines Nahrungsmittels zu unterstützen; wobei das Verfahren (300) umfasst,
- Ermitteln (301) von Rezeptdaten (200) für das herzustellende Nahrungsmittel; wobei die Rezeptdaten (200) zumindest einen Arbeitsschritt (201) umfassen, der von dem Hausgerät (100) auszuführen ist; wobei die Rezeptdaten (200) zumindest eine Vorbedingung (203) in Bezug auf einen Zustand des Hausgeräts (100) umfassen, die zur Ausführung des Arbeitsschrittes (201) erfüllt sein muss, wobei die Vorbedingung (103) eine Bedingung in Bezug auf eine tatsächliche Temperatur eines Verarbeitungsraums des Hausgeräts (100) für Nahrungsmittel umfasst;
- Ermitteln von Zustandsdaten in Bezug auf einen tatsächlichen Zustand des Hausgeräts (100) umfassend Ermitteln von Temperaturdaten in Bezug auf die tatsächliche Temperatur des Verarbeitungsraums des Hausgeräts (100) für Nahrungsmittel;
- Bestimmen (302), ob die Vorbedingung (203) erfüllt ist oder nicht, umfassend Bestimmen auf Basis der Temperaturdaten, ob die Vorbedingung (103) erfüllt ist oder nicht; und
- wenn bestimmt wurde, dass die Vorbedingung (203) nicht erfüllt ist, Durchführen (303) einer Maßnahme, die ein Anpassen der Rezeptdaten (200) in Abhängigkeit von den Zustandsdaten umfasst, um eine Auswirkung der Abweichung des tatsächlichen Zustands des Hausgeräts (100) von einem durch die Vorbedingung (203) geforderten Zustand des Hausgeräts (100) auf das herzustellende Nahrungsmittel zu reduzieren;
**dadurch gekennzeichnet, dass**
- die Vorbedingung (103) zusätzlich eine Bedingung in Bezug auf ein Werkzeug (107) des Hausgeräts (100) umfasst, das durch einen Motor (102) angetrieben wird und mit dem das herzustellende Nahrungsmittel bearbeitet wird.

## Claims

1. Control unit (101) for a household appliance (100), which is configured to support a user in preparing a food product; wherein the control unit (101) is configured
- to determine recipe data (200) for the food product to be prepared; wherein the recipe data (200) can comprise at least one work step (201) to be carried out by the household appliance (100); wherein the recipe data (200) comprises at least one precondition (203) in relation to a state of the household appliance (100), which must be satisfied in order that the work step (201) is carried out;
- to determine state data in relation to an actual state of the household appliance (100);
- to identify whether or not the precondition (203) is satisfied; and
- if it has been identified that the precondition (203) is not satisfied, to carry out an action to the effect that an impact of the unsatisfied precondition (203) on the food product to be prepared is reduced;
- wherein the control unit (101) is configured to determine temperature data in relation to the temperature of a processing compartment of the household appliance (100) for food products and to identify whether or not the precondition (103) is satisfied, so that the precondition (103) comprises a condition in relation to an actual temperature of the processing compartment of the household appliance (100) for food products; and
- the action comprises adapting the recipe data (200) as a function of the state data in order to reduce an impact of the deviation of the actual state of the household appliance (100) from a state of the household appliance (100) required by the precondition (203) on the food product to be prepared;
**characterised in that**
- the precondition (103) also comprises a condition in relation to a tool (107) of the household appliance (100), which is driven by a motor (102) and with which the food product to be prepared is processed.

2. Control unit (101) according to one of the preceding claims, wherein the action comprises operating a component, in particular a temperature regulating unit (105), of the household appliance (100) in order to adjust the state of the household appliance (100) such that the precondition (203) is satisfied.

3. Control unit (101) according to one of the preceding claims, wherein the processing compartment is a container (104) and/or a cooking compartment of the household appliance.

4. Control unit (101) according to one of the preceding claims, wherein the household appliance (100) comprises a multifunctional cooking appliance.

5. Household appliance (100), comprising
- a processing compartment, in particular a container (104) and/or a cooking compartment, for processing a food product; and
- a control unit (101) according to one of the preceding claims, for supporting a user of the household appliance (100) in preparing a food product using the household appliance (100).

6. Method (300) for operating a household appliance (100), which is configured to support a user in preparing a food product; wherein the method (300) comprises
- determining (301) recipe data (200) for the food product to be prepared; wherein the recipe data (200) comprises at least one work step (201) to be carried out by the household appliance (100); wherein the recipe data (200) comprises at least one precondition (203) in relation to a state of the household appliance (100), which must be satisfied in order that the work step (201) is carried out, wherein the precondition (103) comprises a condition in relation to an actual temperature of a processing compartment of the household appliance (100) for food products;
- determining state data in relation to an actual state of the household appliance (100), comprising determining temperature data in relation to the actual temperature of the processing compartment of the household appliance (100) for food products;
- identifying (302) whether or not the precondition (203) is satisfied; comprising identifying on the basis of the temperature data whether or not the precondition (103) is satisfied; and
- if it has been determined that the precondition (203) is not satisfied, carrying out (303) an action comprising adapting the recipe data (200) as a function of the state data in order to reduce an impact of the deviation of the actual state of the household appliance (100) from a state of the household appliance (100) required by the precondition (203) on the food product to be prepared;
**characterised in that**
- the precondition (103) also comprises a condition in relation to a tool (107) of the household appliance (100), which is driven by a motor (102) and with which the food product to be prepared is processed.

## Revendications

1. Unité de commande (101) pour un appareil ménager (100), lequel est configuré pour assister un utilisateur dans la préparation d'un aliment ; dans lequel l'unité de commande (101) est configurée pour
- détecter des données de recette (200) pour l'aliment à préparer ; dans lequel les données de recette (200) comprennent au moins une étape de travail (201) à exécuter par l'appareil ménager (100) ; dans lequel les données de recette (200) comprennent au moins une condition préalable (203) relative à un état de l'appareil ménager (100) qui doit être remplie pour l'exécution de l'étape de travail (201) ;
- détecter des données d'état relatives à un état réel de l'appareil ménager (100) ;
- déterminer si la condition préalable (203) est remplie ou pas; et
- s'il est déterminé que la condition préalable (203) n'est pas remplie, réaliser une mesure pour faire en sorte que l'effet de la condition préalable (203) non remplie soit sur l'aliment à préparer, limité ;
- dans lequel l'unité de commande (101) est configurée pour détecter des données de température relatives à la température d'un espace de traitement de l'appareil ménager (100) pour l'aliment et sur base des données de température, à déterminer si la condition préalable (103) est remplie ou pas de sorte que la condition préalable (103) comprend une condition relative à une température réelle de l'espace de traitement de l'appareil ménager (100) pour l'aliment ; et
- la mesure comprend l'adaptation des données de recette (200) en fonction des données d'état, pour limiter l'effet de la déviation de l'état réel de l'appareil ménager (100) par rapport à ce qu'exige la condition préalable (203) pour l'état de l'appareil ménager (100) sur l'aliment à préparer ;
**caractérisée en ce que**
- la condition préalable (103) comprend en outre une condition relative à un ustensile (107) de l'appareil ménager (100) entraîné par un moteur (102) et qui traite l'aliment à préparer.

2. Unité de commande (101) selon l'une des revendications précédentes, dans lequel la mesure comprend le fonctionnement d'un composant, en particulier d'une unité de mise à une température (105), de l'appareil ménager (100), pour modifier l'état de l'appareil ménager (100) de manière que la condition préalable (203) soit remplie.

3. Unité de commande (101) selon l'une des revendications précédentes, dans laquelle espace de traitement désigne un récipient (104) et/ou un espace de cuisson de l'appareil ménager.

4. Unité de commande (101) selon l'une des revendications précédentes, dans laquelle l'appareil ménager (100) est un appareil de cuisson multifonction.

5. Appareil ménager (100), lequel comprend
- un espace de traitement, en particulier un récipient (104) et/ou un espace de cuisson pour le traitement d'un aliment ; et
- une unité de commande (101) selon l'une des revendications précédentes, pour assister un utilisateur de l'appareil ménager (100) dans la préparation d'un aliment tout en utilisant l'appareil ménager (100).

6. Procédé (300) de fonctionnement d'un appareil ménager (100), lequel est configuré pour assister un utilisateur dans la préparation d'un aliment ; dans lequel le procédé (300) comprend :
- la détection (301) de données de recette (200) pour l'aliment à préparer ; dans lequel les données de recette (200) comprennent au moins une étape de travail (201) à exécuter par l'appareil ménager (100) ; dans lequel les données de recette (200) comprennent au moins une condition préalable (203) relative à un état de l'appareil ménager (100) qui doit être remplie pour l'exécution de l'étape de travail (201) ; la condition préalable (103) comprenant une condition relative à une température réelle de l'espace de traitement de l'appareil ménager (100) pour l'aliment ;
- la détection de données d'état relatives à un état réel de l'appareil ménager (100) comprenant la détection de données de température se rapportant à la température réelle de l'espace de traitement de l'appareil ménager (100) pour l'aliment ;
- la détermination (302) de savoir si la condition préalable (203) est remplie ou pas, comprenant la détermination, sur base des données de température, de savoir si la condition préalable (103) est remplie ou pas ; et
- s'il est déterminé que la condition préalable (203) n'est pas remplie, exécution (303) d'une mesure comprenant l'adaptation des données de recette (200) en fonction des données d'état, pour limiter l'effet de la déviation de l'état réel de l'appareil ménager (100) par rapport à ce qu'exige la condition préalable (203) pour l'état de l'appareil ménager (100) sur l'aliment à préparer ;
**caractérisé en ce que**
- la condition préalable (103) comprend en outre une condition se rapportant à un ustensile (107) de l'appareil ménager (100), entraîné par un moteur (102) et qui traite l'aliment à préparer.
